# EUROPÄISCHE PATENTSCHRIFT

(11) **EP 2 165 510 B1**
(45) Veröffentlichungstag und Bekanntmachung des Hinweises auf die Patenterteilung: **02.01.2013**
(21) Anmeldenummer: 08760741.2
(22) Anmeldetag: 09.06.2008
(51) Int. Cl.: H04L 29/08

(54) **RESSOURCENZUGRIFF UNTER VERMITTLUNG DURCH EIN SICHERHEITSMODUL**
ACCESS TO A RESOURCE BY MEANS OF A SECURITY MODULE
ACCÈS À UNE RESSOURCE PAR COMMUTATION PAR UN MODULE DE SÉCURITÉ

(30) Priorität: 11.06.2007 DE 102007026870
(43) Veröffentlichungstag der Anmeldung: 24.03.2010
(73) Patentinhaber: Giesecke & Devrient GmbH, 81677 München (DE)
(72) Erfinder: HINZ, Walter, 85748 Garching (DE); SPITZ, Stephan, 81247 München (DE)
(86) Internationale Anmeldenummer: PCT/EP2008/057177
(87) Internationale Veröffentlichungsnummer: WO 2008/152023

(56) Entgegenhaltungen:
- WO-A-00/73935
- WO-A-2004/088953
- WO-A1-00/19342
- GB-A- 2 359 644
- US-A1- 2001 018 747
- US-A1- 2002 077 085
- US-A1- 2003 086 542
- US-A1- 2003 187 956
- US-B1- 6 944 650

## Beschreibung

Die Erfindung betrifft allgemein das technische Gebiet der Sicherheitsmodule und spezieller das Gebiet der Vermittlung eines Zugriffs auf eine Ressource durch ein Sicherheitsmodul. Ein Sicherheitsmodul in der Wortwahl des vorliegenden Dokuments kann beispielsweise die Bauform einer Chipkarte oder eines kompakten Chipmoduls oder eines USB-Datenträgers aufweisen.

Es ist bekannt, ein Sicherheitsmodul als Proxy (Zwischenstation) bei der Kommunikation zwischen einem Endgerät und einem Server zu verwenden. So zeigt WO 2006/029758 A1 eine Chipkarte, die einerseits mit einem Endgerät und andererseits - über das zwischengeschaltete Endgerät sowie ein Computernetz - mit einem Server kommuniziert. Ein auf dem Endgerät ausgeführter Browser spricht die Chipkarte als Proxy für die Kommunikation mit dem Server an. Die Chipkarte fungiert dabei als Hilfsmittel des Browsers. Sie führt insbesondere, falls eine Authentisierungsprozedur erforderlich ist, diese selbstständig durch.

Bei dem aus WO 2006/029758 A1 bekannten System besteht jedoch das Problem, dass der Browser geeignet konfiguriert werden muss, um einen Betrieb der Chipkarte als Proxy zu ermöglichen. Hierzu kann es z.B. erforderlich sein, eine IP-Adresse der Chipkarte in ein Konfigurationsmenü des Browsers einzutragen. Insbesondere muss der Browser immer wieder umkonfiguriert werden, wenn das Endgerät manchmal mit und manchmal ohne angeschlossene Chipkarte betrieben wird. Dies ist umständlich und kann die Akzeptanz des Systems bei technisch weniger erfahrenen Anwendern beeinträchtigen.

Der Konferenzbeitrag "Internet-Sicherheit mit Security-Token" von Stephan Spitz und Walter Hinz, D·A·CH Mobility, Oktober 2006, beschreibt die Verwendung einer Internet-Chipkarte als Authentisierungs-Proxy. Beispielsweise kann eine Verbindung zu einem Banking-Server indirekt über die Intemet-Chipkarte hergestellt werden, indem der Benutzer zunächst eine lokale Webseite auf der Karte aufruft und dann auf dieser Webseite einen Link zu dem Banking-Server aktiviert. Einzelheiten zur Funktionsweise dieser Lösung sind jedoch nicht offenbart.

EP 1 021 020 B1 offenbart einen persönlichen Computer, der einen Browser und einen Proxy ausführt und an den eine Chipkarte angeschlossen ist. Der Proxy analysiert eingehende HTTP-Anforderungen. Falls eine solche HTTP-Anforderung einen Zugriff auf die Chipkarte definiert, führt der Proxy den Chipkartenzugriff aus und veranlasst hierbei alle erforderlichen Formatumwandlungen. Der Proxy ermöglicht somit einen Fernzugriff auf eine "normale" Chipkarte.

WO 99/56210 A1 zeigt ein System, bei dem die Funktionalität eines Browsers in einem Mobilkommunikationsnetz auf einen Client und eine ortsfeste Komponente verteilt ist. Die ortsfeste Komponente analysiert vom Client angeforderte Dokumente und ersetzt nachzuladende Datenelemente durch Platzhalter. Solche Datenelemente werden dann von der ortsfesten Komponente selbsttätig nachgeladen und an den Client weitergeleitet.

JP 2002-312325 A offenbart eine Chipkarte, die sich bei mehreren unterschiedlichen Diensten zu authentisieren vermag.

Das Normdokument "Hypertext Transfer Protocol - HTTP/1.1" von R. Fielding et al., herausgegeben vom World Wide Web Consortium, RFC 2616, definiert Anforderungen *(requests)* und Antworten *(responses)* gemäß dem HTTP-Protokoll und erläutert unter anderem die Begriffe URL, Ursprungsserver *(origin server),* Gateway, Tunnel und Proxy, die zum Teil auch im vorliegenden Dokument verwendet werden.

Aus dem Dokument "Traditional IP Network Adress Translator (Traditional NAP)" vom P. Srisuresh et al., Januar 2001, am 15.1.2008 verfügbar unter http://tools.ietf.org/html/rfc3022, ist das auch im vorliegenden Dokument verwendete NAT-Konzept zur Vermittlung zwischen externen und internen IP-Adressen bekannt.

Die Erfindung hat die Aufgabe, eine sichere und/ oder benutzerfreundliche Technik zum Zugriff auf eine Ressource über ein Sicherheitsmodul bereitzustellen.

Erfindungsgemäß wird diese Aufgabe durch ein Verfahren mit den Merkmalen des Anspruchs 1, ein Sicherheitsmodul gemäß Anspruch 16 und ein Computerprogrammprodukt gemäß Anspruch 17 gelöst. Die abhängigen Ansprüche betreffen optionale Merkmale einiger Ausgestaltungen der Erfindung.

Die Erfindung geht von der Grundidee aus, das Sicherheitsmodul nicht wie einen Proxy, sondern wie einen Ursprungsserver anzusprechen. Dies kann beispielsweise geschehen, indem in einen Browser eines externen Endgeräts eine URL eingegeben wird, die als Hostangabe eine Adresse des Sicherheitsmoduls enthält. In der URL ist ferner ein Bezeichner enthalten. Die URL wird von dem Sicherheitsmodul analysiert und das Sicherheitsmodul ermittelt daraus sowohl eine Hostangabe als auch eine Pfadangabe der Ressource. Das Sicherheitsmodul greift dann über diese Host- und Pfadangabe auf die Ressource zu.

Die Erfindung bietet den erheblichen Vorteil, dass der Browser nicht zur Verwendung eines als Proxy ausgestalteten Sicherheitsmoduls konfiguriert zu werden braucht. Dies ist insbesondere dann wichtig, wenn das Sicherheitsmodul von einem unerfahrenen Benutzer verwendet werden soll oder wenn der Browser teils mit und teils ohne angeschlossenes Sicherheitsmodul betrieben wird. Ferner kann das Sicherheitsmodul alle Sicherheitseinstellungen beim Zugriff auf die Ressource bestimmen und somit mögliche Probleme bei einer nicht optimalen Konfiguration des Browsers vermeiden.

In manchen Ausführungsformen weist das Sicherheitsmodul eine Umsetztabelle auf, die zumindest zur Ermittlung der Hostangabe der Ressource herangezogen wird. Der Benutzer kann dann bequem auf die gemäß der Umsetztabelle zulässigen Server und/oder Ressourcen zugreifen. Ferner werden durch diese Maßnahme Angriffe vermieden, die auf falsch geschriebenen Hostangaben beruhen. In manchen Ausgestaltungen wird auch die Pfadangabe der Ressource durch einen Zugriff auf die Umsetztabelle ermittelt, während in anderen Ausführungsformen die Pfadangabe ein Teil des Bezeichners ist oder daraus schematisch ableitbar ist.

In.bevorzugter Ausgestaltung ist vorgesehen, dass das Sicherheitsmodul auch von einer Ressource eingehende Antworten analysiert und zumindest manche darin enthaltene URLs durch modifizierte URLs ersetzt. Die modifizierten URLs weisen als Hostangabe eine Adresse des Sicherheitsmoduls auf. Diese Maßnahme bewirkt, dass auch ein folgender Ressourcenzugriff, bei dem der Benutzer einem in der Antwort enthaltenen Verweis folgt, über das Sicherheitsmodul geleitet wird.

Ferner werden in vielen Ausgestaltungen zumindest manche Host- und/oder Pfadangaben, die in Verweisen einer beim Sicherheitsmodul eingehenden Antwort enthalten sind, gemäß der Umsetztabelle durch Bezeichner ersetzt. Diese Ersetzung stellt in vielen Ausführungsformen das Gegenstück zu den bei der Bearbeitung von Anforderungen vorgenommenen Änderungen dar, so dass dem Benutzer konsistent Bezeichner und dem Server konsistent die entsprechenden Host- und/oder Pfadangaben präsentiert werden.

Sind in einer Antwort Verweise mit Host- und/oder Pfadangaben enthalten, die dem Sicherheitsmodul noch nicht bekannt sind, so wird in manchen Ausgestaltungen die Umsetztabelle dynamisch ergänzt, während in anderen Ausgestaltungen Verweise mit unbekannten Host- und/oder Pfadangaben durch vorbestimmte Verweise oder Sicherheitshinweise ersetzt werden.

In manchen Ausführungsformen weist das Sicherheitsmodul eine Funktion zum automatischen Eintragen von Formulardaten und/oder eine Protokollierungsfunktion auf.

Das Sicherheitsmodul ist in manchen Ausgestaltungen ein kompaktes und gegen Manipulationen gesichertes Gerät *(tamperproof device).*

Das Computerprogrammprodukt kann Programmbefehle auf einem körperlichen oder einem nicht-körperlichen Datenträger aufweisen, der beispielsweise bei der Herstellung oder Initialisierung eines erfindungsgemäßen Sicherheitsmoduls verwendet werden kann. Ein solcher Datenträger kann z.B. eine CD-ROM oder ein Halbleiterspeicher oder ein über ein Computernetz übermitteltes Signal sein.

Weitere Merkmale, Vorteile und Aufgaben der Erfindung gehen aus der folgenden genauen Beschreibung mehrerer Ausführungsbeispiele hervor. Es wird auf die schematischen Zeichnungen verwiesen, in denen zeigen:
Fig.1 ein Blockdiagramm eines Systems nach einem ersten Ausführungsbeispiel der Erfindung beim Übertragen von Anforderungen,
Fig. 2 ein Blockdiagramm des Systems von Fig.1 beim Übertragen von Antworten,
Fig. 3 ein Blockdiagramm wie in Fig. 2 in einem zweiten Ausführungsbeispiel,
Fig. 4 ein Blockdiagramm wie in Fig.1 in einem dritten Ausführungsbeispiel,
Fig. 5 ein Blockdiagramm wie in Fig. 2 in dem dritten Ausführungsbeispiel, und
Fig. 6 und Fig. 7 Darstellungen eines beispielhaften Ablaufs bei der Benutzung des Sicherheitsmoduls zum Zugriff auf ein Bankportal.

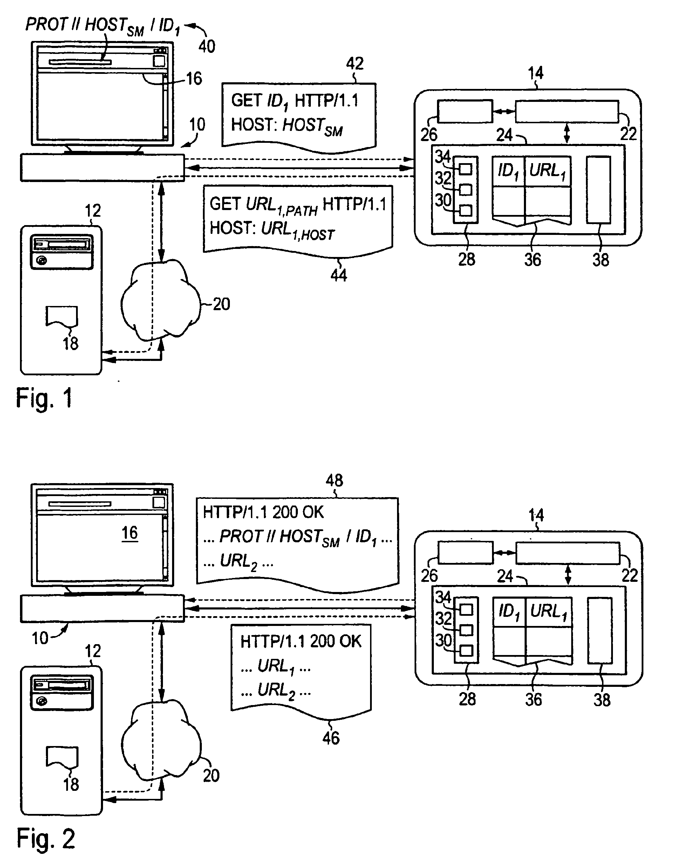

In Fig.1 bis Fig. 5 sind ein Endgerät 10, ein Server 12 und ein Sicherheitsmodul 14 gezeigt. Das Endgerät 10 ist im vorliegenden Ausführungsbeispiel ein persönlicher Computer, auf dem ein üblicher Internet-Browser - in Fig.1 bis Fig. 5 symbolisiert durch ein Browserfenster 16 - ausgeführt wird. In Ausführungsalternativen kann als Endgerät 10 auch ein Mobilgerät - z.B. ein Mobiltelefon oder ein PDA - mit einem entsprechenden Browser eingesetzt werden.

Der Server 12 ist als leistungsfähiger Rechner oder als Cluster von Rechnern ausgestaltet. Der Server 12 stellt eine Ressource 18 bereit, auf die ein Benutzer vom Browser des Endgeräts 10 aus zugreifen möchte. Die Ressource 18 kann beispielsweise eine Internet-Seite oder eine Internet-Anwendung - z.B. ein Bankportal - sein.

Das Endgerät 10 und der Server 12 sind mit einem Computernetz 20 - z.B. dem Internet oder einem Intranet - verbunden. Ferner ist das Sicherheitsmodul 14 mit dem Endgerät 10 beispielsweise über eine USB-Schnittstelle oder eine Chipkarten-Schnittstelle verbunden. Diese Verbindungen sind in Fig. 1 bis Fig. 5 durch durchgezogene Pfeile dargestellt, während Kommunikationsvorgänge durch gestrichelte Pfeile veranschaulicht sind.

Das Sicherheitsmodul 14 ist im vorliegenden Ausführungsbeispiel als Chipkarte mit einem Prozessor 22, einem Speicher 24 und einer Kommunikationsschnittstelle 26 ausgestaltet. Der Speicher 24 weist ein Programmpaket 28 auf, das unter anderem ein Betriebssystem 30, einen Protokollstapel 32 und ein Vermittlungsprogramm 34 zur Implementierung der vorliegenden Erfindung bereitstellt. Ferner sind im Speicher 24 eine Umsetztabelle 36 und eine Protokolldatei 38 enthalten.

Das Sicherheitsmodul 14 ist dazu ausgelegt, Anforderungen *(requests)* vom Endgerät 10 zu erhalten und Antworten *(responses)* an das Endgerät 10 zu senden. Hierzu wird auf physikalischer Ebene das durch die Schnittstelle 26 vorgegebene Protokoll - z.B. USB - verwendet. Auf den höheren Ebenen werden die durch den Protokollstapel 32 bereitgestellten Protokolle eingesetzt. Dies sind z.B. SLIP oder RNDIS oder CDC oder EEM für die Sicherungsschicht und TCP/IP für die Vermittlungs- und Transportschicht. Das Vermittlungsprogramm 34 implementiert die Kommunikation in der Anwendungsschicht, beispielsweise mittels HTTP oder HTTPS.

Die Kommunikation zwischen dem Endgerät 10 und dem Sicherheitsmodul 14 erfolgt in einem privaten Netz mit einem lokalen Adressbereich, z.B. dem IP-Adressbereich 192.168.0.x. Das Endgerät 10 kommuniziert ferner über das externe Computernetz 20 mit dem Server 12. Außerdem vermittelt das Endgerät 10 zwischen dem privaten Netz und dem Computernetz 20 über eine NAT-Router-Funktion (NAT = *Network Address Translation* = Netzwerkadressübersetzung), die vom Betriebssystem des Endgeräts 10 oder von einem im Endgerät 10 installierten Zusatzprogramm bereitgestellt wird. Das Sicherheitsmodul 14 kann daher über das Endgerät 10 und das Computernetz 20 auf den Server 12 zugreifen.

Die in den beiden vorhergehenden Absätzen kurz dargelegten Kommunikationsfunktionen sind als solche bekannt und z.B. in dem eingangs erwähnten Konferenzbeitrag "Internet-Sicherheit mit Security-Token" erläutert.

Es wird nun unter Hinweis auf Fig. 1 und Fig. 2 ein beispielhafter Kommunikationsvorgang beschrieben, bei dem ein Benutzer des Endgeräts 10 über den auf dem Endgerät 10 ausgeführten Browser und das Sicherheitsmodul 14 auf die Ressource 18 zugreift. Das Sicherheitsmodul 14 dient hierbei als logische Zwischenstation für die HTTP(S)-Datenübertragung zwischen dem Endgerät 10 und dem Server 12. Allerdings wird das Sicherheitsmodul 14 nicht wie ein Proxy oder eine sonstige Zwischenstation, sondern wie ein Ursprungsserver *(origin server)* angesprochen. Dies geschieht durch die Verwendung spezieller URLs (URL = *Uniform Resource Locator* = einheitliche Ressourcenbezeichnung), die zwar in ihrer Syntax den einschlägigen Normen - z.B. RFC 2616 - entsprechen, aber eine gegenüber der normalen Bedeutung abgewandelte Bedeutung haben.

Der Vorgang beginnt, indem der Benutzer eine solche spezielle URL 40 in eine Adresszeile des Browserfensters 16 eintippt oder einem Verweis folgt, der eine derartige URL 40 enthält. Ebenso wie eine normgemäße URL enthält die URL 40 eine Angabe PROT des zu verwendenden Protokolls, eine Hostangabe und eine Pfadangabe. Im vorliegenden Beispiel beruht die Kommunikation zwischen dem Endgerät 10 und dem Sicherheitsmodul 14 auf HTTP als Protokoll, so dass PROT für "http:" steht. In Ausführungsvarianten kann dagegen HTTPS oder ein anderes gesichertes Protokoll eingesetzt werden.

Als Hostangabe enthält die URL 40 eine Adresse *HOST_{SM},* unter der das Sicherheitsmodul 14 vom Endgerät 10 aus erreichbar ist. Die Adresse *HOST_{SM}* kann beispielsweise eine numerische IP-Adresse sein, oder ein Hostname, wenn in dem durch das Endgerät 10 und das Sicherheitsmodul 14 gebildeten privaten Netz eine DNS-Server-Funktion implementiert ist.

Das Sicherheitsmodul 14 wird somit wie ein Ursprungsserver - und nicht wie ein Proxy - angesprochen, so dass keine besondere Konfigurierung des Browsers erforderlich ist.

Als Pfadangabe enthält die URL 40 einen Bezeichner *ID₁*. Der Bezeichner *ID₁* hat die Syntax eines URL-Pfades gemäß dem HTTP-Standard. Allerdings wird der Bezeichner *ID₁* von dem Sicherheitsmodul 14 nicht als Pfad eines lokalen Dateisystems interpretiert. Vielmehr ermittelt das Sicherheitsmodul 14 aus dem Bezeichner *ID₁* die gewünschte Ressource - z.B. die Ressource 18 -, die sich außerhalb des Sicherheitsmoduls 14 auf einem externen Server - z.B. dem Server 12 - befindet. Dies schließt, wie später noch genauer erläutert wird, die Bestimmung einer Hostangabe und einer Pfadangabe der Ressource 18 in Abhängigkeit von dem Bezeichner *ID₁* ein. Im Gegensatz zur üblichen Bedeutung von URLs kann bei der vorliegenden Erfindung die Hostangabe der URL 40 nicht zur Identifikation des externen Servers 12 verwendet werden, weil diese Hostangabe für die Adresse *HOST_{SM}* des Sicherheitsmoduls 14 benötigt wird.

Der auf dem Endgerät 10 ausgeführte Browser setzt die URL 40 in eine erste Anforderung 42 - im vorliegenden Beispiel eine HTTP-Anforderung - um, die direkt an das Sicherheitsmodul 14 gesendet wird. Die erste Anforderung 42 enthält als Hostangabe die Adresse HOST_{SM} des Sicherheitsmoduls 14 und als Pfadangabe den Bezeichner *ID₁.* Zum Beispiel kann, wenn die URL 40 "http://192.168.0.2/Bankportal" lautet, die folgende erste Anforderung 42 an das Sicherheitsmodul 14 gesendet werden:
GET Bankportal HTTP/1.1
HOST: 192.168.0.2

Im Sicherheitsmodul 14 wird die eingehende erste Anforderung 42 in eine zweite Anforderung 44 umgesetzt. Hierbei greift das Vermittlungsprogramm 34 im vorliegenden Ausführungsbeispiel auf die Umsetztabelle 36 zu, um den in der ersten Anforderung 42 enthaltenen Bezeichner in eine URL der gewünschten Ressource aufzulösen. In dem in Fig.1 gezeigten Beispiel weist die Umsetztabelle 36 einen Eintrag auf, der dem Bezeichner *ID₁* die hier mit URL₁ bezeichnete URL zuordnet. Beispielsweise kann der hier relevante Teil der Umsetztabelle 36 wie folgt lauten:

| **Bezeichner** | **URL** |
|---|---|
| *ID₁ =* Bankportal | *URL₁ =* https://direkt.postbank.de/portalApp/index.jsp |
| ... | ... |

Wenn das Vermittlungsprogramm 34 den Eintrag mit dem Bezeichner *ID₁* in der Umsetztabelle 36 gefunden hat, ermittelt es aus der zugehörigen URL *URL₁* das für den Ressourcenzugriff zu verwendende Protokoll *URL_{1,PROT} -* hier https - sowie eine Hostangabe *URL_{1,HOST}* der Ressource 18 - hier "direkt.postbank.de" - und eine Pfadangabe *URL_{1,PATH}* der Ressource 18 - hier "/portalApp/index.jsp". Es versteht sich, dass die Pfadangabe einer Ressource auch der leere Pfad "/" sein kann.

Im hier beschriebenen Ausführungsbeispiel enthält jeder Eintrag in der Umsetztabelle 36 die gesamte URL als Zeichenkette, während in Ausführungsalternativen das Protokoll, die Hostangabe und die Pfandangabe in getrennten Datenfeldern der Umsetztabelle 36 enthalten sein können. Ferner kann die Umsetztabelle 36 in manchen Ausgestaltungen mehrere Teile aufweisen. Ein Teil wird durch einen ersten Abschnitt des Bezeichners adressiert und enthält die Hostangaben und gegebenenfalls das jeweilige Protokoll, während ein anderer Teil durch einen zweiten Abschnitt des Bezeichners adressiert wird und die Pfadangaben enthält.

Das Vermittlungsprogramm 34 erzeugt nun die zweite Anforderung 44, die die Hostangabe *URL_{1,HOST}* und die Pfadangabe *URL_{1,PATH}* aus der URL *URL₁* enthält. Die zweite Anforderung 44 wird über das Endgerät 10 und das Computernetz 20 an den durch die Hostangabe *URL_{1,HOST}* bezeichneten Server - hier z.B. den Server 12 - gesendet. Dabei wird das spezifizierte Protokoll *URL_{1,PROT}* verwendet.

Wenn also, wie im hier beschriebenen Beispiel, das HTTPS-Protokoll für die Kommunikation zwischen dem Sicherheitsmodul 14 und dem Server 12 eingesetzt werden soll, so wird in an sich bekannter Weise zunächst ein gesicherter Datenübertragungskanal zwischen dem Sicherheitsmodul 14 und dem Server 12 aufgebaut. Hierbei wird der Server 12 authentifiziert, indem das Sicherheitsmodul 14 ein Serverzertifikat überprüft. Ferner wird zwischen dem Sicherheitsmodul 14 und dem Server 12 ein Sitzungsschlüssel ausgehandelt, mit dem dann alle weiteren Kommunikationsvorgänge verschlüsselt werden. Diese Funktionen sind unabhängig von dem Endgerät 10, so dass selbst eine fehlerhafte oder unsichere Konfiguration des Endgeräts 10 und/oder des darauf ausgeführten Browsers kein Sicherheitsrisiko darstellt.

Wenn, wie im gerade beschriebenen Beispiel, die Kommunikation zwischen dem Sicherheitsmodul 14 und dem Server 12 über einen gesicherten Kanal erfolgt, wird jede unerwünschte Einflussnahme des Endgeräts 10 zuverlässig verhindert. Auch wenn das Sicherheitsmodul 14 mit dem Server 12 über das ungesicherte HTTP-Protokoll kommuniziert, vermittelt das Endgerät 10 die Anforderungen und Antworten lediglich, ohne sie inhaltlich auszuwerten oder zu verändern.

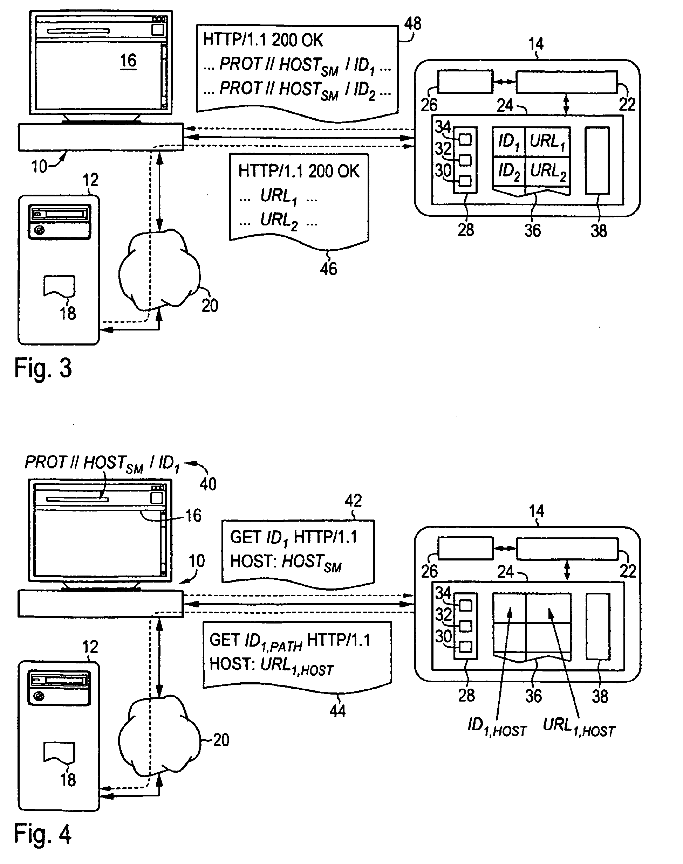

Wie in Fig. 2 und Fig. 3 gezeigt, antwortet der Server 12 auf die zweite Anforderung 44 mit einer ersten Antwort 46, die über das Computernetz 20 und das Endgerät 10 zum Sicherheitsmodul 14 gelangt. Das Vermittlungsprogramm 34 des Sicherheitsmoduls 14 analysiert die erste Antwort 46 nach Verweisen, die eine URL oder einen lokalen Ressourcenbezeichner enthalten. Wie im folgenden noch genauer beschrieben wird, modifiziert das Vermittlungsprogramm 34 einige oder alle dieser Verweise, um sie an das Schema der URL 40 anzupassen. Die entsprechend veränderte Antwort wird dann als zweite Antwort 48 an das Endgerät 10 ausgegeben und dort in dem Browserfenster 16 angezeigt. Die Analyse und Modifikation der Antworten durch das Vermittlungsprogramm 34 betrifft nicht nur Verweise, die in HTML-Seiten enthalten sind, sondern z.B. auch Verweise in HTTP-Antworten, die eine Umleitung *(redirection)* bewirken.

Die Modifikation von Verweisen durch das Vermittlungsprogramm 34 bewirkt, dass wiederum das Sicherheitsmodul 14 angesprochen wird, wenn der Benutzer auf einen modifizierten Verweis klickt oder der Browser einem HTTP-Umleitungsbefehl folgt. Ferner werden in den modifizierten Verweisen die Bezeichner aus der Umsetztabelle 36 - z.B. *ID₁ -* statt der entsprechenden URLs - z.B. *URL₁* - verwendet. Durch diese Maßnahme ist für den Benutzer in der Adresszeile des Browserfensters 16 nur der jeweilige Bezeichner und nicht die zugeordnete URL sichtbar.

Fig. 2 zeigt beispielhaft eine Ausführungsform, bei der das Vermittlungsprogramm 34 nur solche URLs oder Ressourcenbezeichner modifiziert, die in Verweisen der ersten Antwort 46 enthalten sind und für die ein Eintrag in der Umsetztabelle 36 existiert. Dies trifft beispielsweise für die URL *URL₁* in der ersten Antwort 46 zu. Das Vermittlungsprogramm 34 erzeugt in der zweiten Antwort 48 aus der URL *URL₁* eine modifizierte URL, die als Protokollangabe das für die Kommunikation zwischen dem Endgerät 10 und dem Sicherheitsmodul 14 verwendete Protokoll PROT, als Hostangabe die Adresse *HOST_{SM}* des Sicherheitsmoduls 14 und als Pfadangabe den Bezeichner *ID₁* aus dem Eintrag in der Umsetztabelle 36 aufweist. Die modifizierte URL in der der zweiten Antwort 48 hat also, ebenso wie die URL 40, die folgende Form:
*PROT* // *HOST_{SM}* / *ID₁*

Die ebenfalls in der ersten Antwort 46 enthaltene URL URL₂ wird im Ausführungsbeispiel gemäß Fig. 2 unverändert in der zweiten Antwort 48 belassen, weil für die URL URL₂ kein Eintrag in der Umsetztabelle 36 enthalten ist. Wenn der Benutzer dem entsprechenden Verweis folgt, verlässt er die gesicherte Kommunikation mit dem Sicherheitsmodul 14.

In einer Abwandlung der Ausgestaltung gemäß Fig. 2 werden URLs, für die kein Eintrag in der Umsetztabelle 36 existiert, in der zweiten Antwort 48 gelöscht oder durch einen Sicherheitshinweis oder durch einen vorbestimmten Verweis - z.B. auf eine Erläuterungsseite - ersetzt. Durch diese Maßnahme wird sichergestellt, dass der Benutzer den durch das Sicherheitsmodul 14 vorgegebenen Bereich zugänglicher Ressourcen nicht ungewollt verlässt.

Die in Fig. 3 veranschaulichte Ausführungsform unterscheidet sich von der Ausgestaltung gemäß Fig. 2 dadurch, dass die Umsetztabelle 36 dynamisch erweitert wird. Dies kann wünschenswert sein, um nicht vorhersagbare URLs - z.B. URLs mit einem Sitzungsbezeichner - in die Umsetztabelle 36 aufnehmen zu können.

In der Ausgestaltung gemäß Fig. 3 werden alle URLs und lokalen Ressourcenbezeichner, die in Verweisen in der ersten Antwort 46 enthalten sind, auf die oben beschriebene Art modifiziert. Falls in der Umsetztabelle 36 bereits ein passender Eintrag für eine URL - hier z.B. der Eintrag für die URL *URL₁* - enthalten ist, so wird beim Erzeugen der modifizierten URL der in diesem Eintrag angegebene Bezeichner - hier z.B. der Bezeichner *ID₁* - verwendet. Falls für eine URL oder einen lokalen Ressoucenbezeichner jedoch noch kein Eintrag in der Umsetztabelle 36 besteht - wie dies z.B. für die URL URL₂ der Fall ist -, so bestimmt das Vermittlungsprogramm 34 einen neuen Bezeichner - hier z.B. den Bezeichner *ID*₂. Das Vermittlungsprogramm 34 erstellt einen neuen Eintrag mit den Werten *ID*₂ und URL₂ in der Umsetztabelle 36. Ferner erzeugt das Vermittlungsprogramm 34 die modifizierte URL in der zweiten Antwort 48 unter Verwendung des neuen Bezeichners *ID*₂, wie in Fig. 3 gezeigt.

In weiteren Ausgestaltungen werden abgewandelte Ersetzungsstrategien angewendet. Beispielsweise können die in der ersten Antwort 46 enthaltenen URLs anders als die lokalen Ressourcenbezeichner behandelt werden. Alternativ oder zusätzlich werden in manchen Ausführungsformen nicht für alle, sondern nur für manche noch nicht bekannte URLs und/ oder Ressourcenbezeichner neue Einträge in der Umsetztabelle 36 angelegt. Beispielsweise kann vorgesehen sein, nur dann einen neuen Eintrag anzulegen, wenn eine in der ersten Antwort 46 enthaltene URL eine von mehreren vorbestimmten Hostangaben aufweist. Verweise mit anderen URLs werden, wie bereits oben beschrieben, entweder unverändert in der zweiten Antwort belassen oder durch andere, nicht aus der Umsetztabelle 36 entnommene Angaben - z.B. einen Sicherheitshinweis - ersetzt.

Bei den bisher beschriebenen Ausführungsbeispielen enthielten die Einträge in der Umsetztabelle 36 jeweils den vollständigen Bezeichner aus der URL 40 - z.B. *ID*₁ - und die vollständige zugeordnete URL - z.B. *URL*₁. In Ausführungsalternativen weist der Bezeichner dagegen mehrere Komponenten auf, von denen nur eine zur Adressierung eines Eintrags in der Umsetztabelle 36 dient. Mindestens eine andere Komponente des Bezeichners wird dagegen unabhängig von der Umsetztabelle 36 verarbeitet. Beispielsweise kann diese Komponente unverändert in die modifizierte URL aufgenommen werden, oder es können lediglich schematische Ersetzungen - z.B. Ersetzungen von Sonderzeichen - vorgenommen werden.

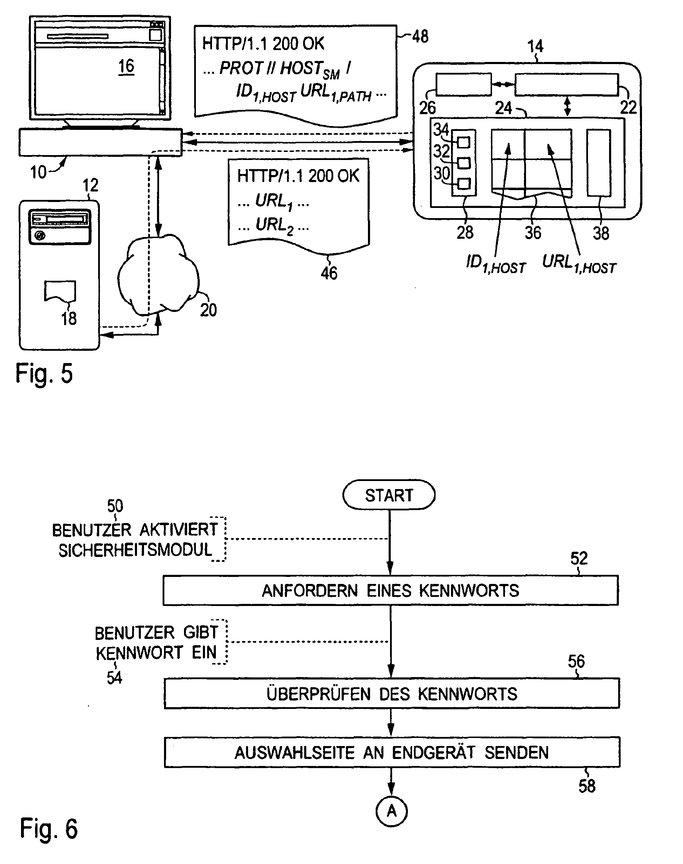

Fig. 4 und Fig. 5 veranschaulichen ein solches Ausführungsbeispiel, bei dem der in der URL 40 enthaltene Bezeichner *ID₁* zwei Komponenten aufweist, nämlich einen Hostbezeichner *ID_{1,HOST}* und eine Pfadangabe *ID_{1,PATH}.* Der Hostbezeichner *ID_{1,HOST}* dient zur Identifikation des Servers 12 und wird über die Umsetztabelle 36 in eine Hostadresse *URL_{1,HOST}* aufgelöst. Die Pfadangabe *ID_{1,PATH}* bezeichnet den absoluten Pfad der gewünschten Ressource 18 in einer für URL-Pfadangaben üblichen Weise. Die gesamte URL 40 folgt syntaktisch den HTTP-Normen; beispielsweise kann die URL 40 wie folgt lauten:
http://192.168.0.2/Bank/ portalApp/ index.jsp

In der gerade angegebenen URL 40 ist "192.168.0.2" die Adresse *HOST_{SM}* des Sicherheitsmoduls 14, "Bank" ist der Hostbezeichner *ID_{1,HOST}*, und "/portalApp/index.jsp" ist die Pfadangabe *ID_{1,PATH}.*

Das Sicherheitsmodul 14 erhält diese Informationen in der ersten Anforderung 42 und schlägt den Hostbezeichner *ID_{1,HOST}* in der Umsetztabelle 36 nach, um die entsprechende Hostadresse *URL_{1,HOST}* zu ermitteln. Beispielsweise kann der hier relevante Teil der Umsetztabelle 36 wie folgt lauten:

| **Hostbezeichner** | **Hostadresse** |
|---|---|
| *ID_{1,HOST}* = Bank | *URL_{1,HOST}* = direkt.postbank.de |
| ... | ... |

Das Sicherheitsmodul 14 erzeugt nun die zweite Anforderung 44 mit der aus der Umsetztabelle 36 entnommenen Serveradresse *URL_{1,HOST}* und der aus dem Bezeichner *ID₁* entnommenen Pfadangabe *ID_{1,PATH}*. Im hier gegebenen Beispiel lautet die zweite Anforderung 44 dann wie folgt:
GET /portalApp/index.jsp HTTP/1.1
HOST: direkt.postbank.de

Damit ist die zweite Anforderung 44 in dem Ausführungsbeispiel gemäß Fig. 4 identisch zu der zweiten Anforderung 44 in dem Ausführungsbeispiel gemäß Fig. 1. Auch hinsichtlich des Sendens der zweiten Anforderung an den Server 12 und des Empfangens der ersten Antwort 46 unterscheiden sich die beiden Ausführungsbeispiele nicht. Unterschiede bestehen jedoch in der Verarbeitung der ersten Antwort 46, wie in Fig. 5 gezeigt. Analog zur Verarbeitung von Anforderungen nimmt das Sicherheitsmodul 14 bei der Verarbeitung von Antworten in modifizierte URLs nur jeweils eine aus der Umsetztabelle 36 ermittelte Hostangabe auf, während die in der URL der ersten Antwort 46 enthaltene Pfadangabe unverändert bleibt oder nur schematisch verändert wird.

In dem in Fig. 5 dargestellten Beispiel enthält die erste Antwort 46 einen Verweis mit einer URL *URL₁,* die eine Hostangabe *URL_{1,HOST}* und eine Pfadangabe *URL_{1,PATH}* aufweist. Das im Sicherheitsmodul 14 ausgeführte Vermittlungsprogramm 34 analysiert die URL *URL₁*, ermittelt den der Hostangabe *URL_{1,HOST}* zugeordneten Eintrag in der Umsetztabelle 36 und erzeugt eine modifizierte URL für die zweite Antwort 48. Ähnlich wie in den Ausführungsbeispielen nach Fig. 2 und Fig. 3 ist die modifizierte URL so aufgebaut, dass der Kommunikationsablauf zwischen dem Endgerät 10 und dem Sicherheitsmodul 14 fortgesetzt wird, wenn der Benutzer dem Verweis mit der modifizierten URL folgt.

Die modifizierte URL enthält daher, wie in Fig. 5 gezeigt, als Protokollangabe das für die Kommunikation zwischen dem Endgerät 10 und dem Sicherheitsmodul 14 verwendete Protokoll PROT, als Hostangabe die Adresse *HOST_{SM}* des Sicherheitsmoduls 14 und als Pfadangabe einen Pfad, der sich aus dem Hostbezeichner *ID_{1,HOST}* gemäß dem Eintrag in der Umsetztabelle 36 und der Pfadangabe *URL_{1,PATH}* der URL *URL₁* zusammensetzt. Insgesamt ergibt sich damit in der zweiten Antwort 48 ein Verweis mit einer URL der folgenden Form:
*PROT* // *HOST_{SM}* / *ID_{1,HOST} URL_{1,PATH}*

Ähnlich wie bereits im Zusammenhang mit Fig. 2 und Fig. 3 beschrieben, kann auch bei dem in Fig. 5 gezeigten Beispiel die Situation, dass für eine in einer eingehenden URL enthaltenen Hostangabe - hier z.B. *URL_{2,HOST}* - kein Eintrag in der Umsetztabelle 36 enthalten ist, auf unterschiedliche Art behandelt werden. In manchen Ausgestaltungen kann die betreffende URL unverändert in die zweite Antwort 48 aufgenommen oder durch eine vorbestimmte URL ersetzt oder gelöscht oder durch einen Sicherheitshinweis ersetzt werden. In anderen Ausgestaltungen wird dagegen die Umsetztabelle 36 dynamisch erweitert. Hierzu erzeugt das Vermittlungsprogramm 34 einen neuen Hostbezeichner - z.B. *ID_{2,HOST}* - und schreibt diesen zusammen mit der Hostangabe der URL - z.B. *URL_{2,HOST} -* in einen neuen Eintrag der Umsetztabelle 36. In der zweiten Antwort 48 wird dann eine modifizierte URL der oben beschriebenen Form erzeugt.

In einer weiteren Abwandlung der in Fig. 4 und Fig. 5 gezeigten Ausgestaltung werden Hostbezeichner - z.B. *ID_{1,HOST} -* verwendet, die sich ohne Rückgriff auf eine Umsetztabelle in entsprechende Hostangaben - z.B. *URL_{1,HOST} -* umwandeln lassen. Beispielsweise können die Hostbezeichner so gewählt werden, dass sie schematisch - z.B. durch Ersetzen von Gliederungszeichen - in normgemäße Hostangaben umsetzbar sind. Im Extremfall können sogar normgemäße Hostangaben als Hostbezeichner verwendet werden, so dass gar keine Umsetzung erforderlich ist. Ausgestaltungen ohne Umsetztabelle sind besonders einfach und Speicherplatz sparend. Es besteht jedoch das Risiko, dass die Sicherheit beeinträchtigt wird, weil Benutzer möglicherweise Ressourcen aufrufen, die sich über die vorgegebenen Einträge in einer Umsetztabelle nicht erreichen ließen.

Bei allen Ausführungsbeispielen, die die Umsetztabelle 36 einsetzen, ist dagegen zumindest der Anfang der Kommunikation auf diejenigen Ressourcen beschränkt, die sich über einen Bezeichner und einen zugehörigen Eintrag in der Umsetztabelle 36 erreichen lassen. Dies verhindert beispielsweise Betrugsversuche, bei denen Benutzer auf gefälschte Seiten gelockt werden, deren URL verwechselbar ähnlich zu der URL einer gewünschten Seite ist. Ferner kann es für den Benutzer bequemer sein, einen Bezeichner statt einer möglicherweise langen URL zu verwenden. Auch kann es aus Sicherheitsgründen vorteilhaft sein, wenn dem Benutzer die URL der gewünschten Ressource nicht bekanntgegeben werden muss.

Der anfängliche Inhalt der Umsetztabelle 36 wird in einem Einrichtungsvorgang (Setup-Phase) festgelegt. Dieser Einrichtungsvorgang kann beispielsweise beim Hersteller des Sicherheitsmoduls 14 oder bei einem Dienstleister - z.B. einer Bank, die ihren Kunden das Sicherheitsmodul 14 anbietet - oder auch beim Endkunden vorgenommen werden. Hierzu bietet das Sicherheitsmodul 14 eine kennwortgeschützte Web-Konfigurationsschnittstelle an, über die Einträge in der Umsetztabelle 36 eingegeben werden können.

Die Web-Konfigurationsschnittstelle dient auch zur Einstellung aller anderen Betriebsparameter des Sicherheitsmoduls 14. So kann z.B. das Sicherheitsmodul 14 so eingestellt werden, dass es - unabhängig von den bereits beschriebenen Sicherheitsfunktionen - nur Zugriffe auf bestimmte Ressourcen oder bestimmte Web-Seiten zulässt. Andere Einstellungsmöglichkeiten betreffen z.B. die Behandlung von Cookies durch das Sicherheitsmodul 14 bei der Kommunikation mit dem Server 12.

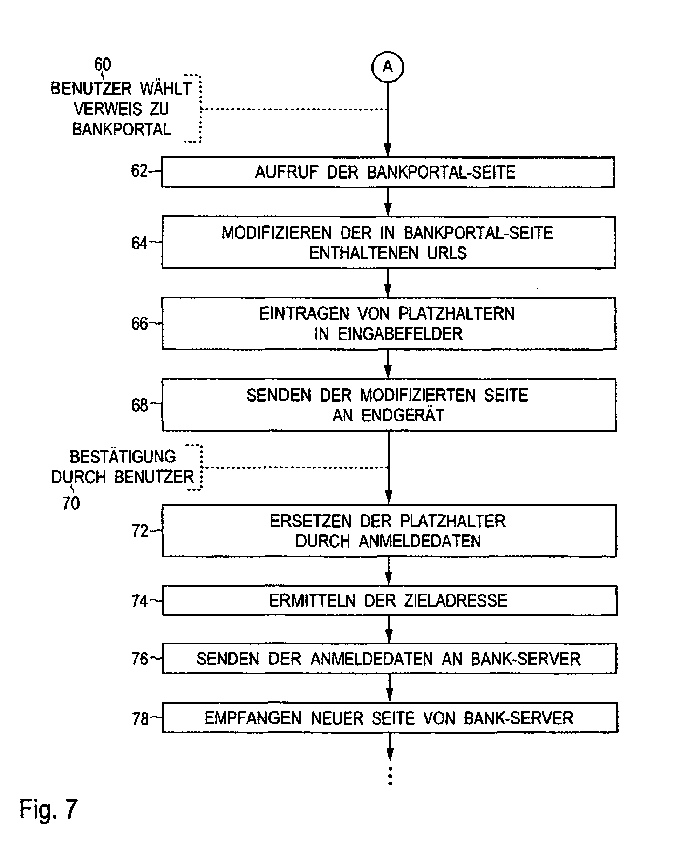

Das Sicherheitsmodul 14 in allen hier beschriebenen Ausgestaltungen kann optional weitere Funktionen aufweisen. Insbesondere handelt es sich dabei um sicherheitsrelevante Funktionen oder um Funktionen, die den im Sicherheitsmodul 14 enthaltenen Datenspeicher und/oder die Rechenleistung des Prozessors 22 nutzen. Eine derartige Funktion ist beispielsweise, dass das Sicherheitsmodul 14 Anmeldedaten für den Zugriff auf externe Ressourcen speichern und automatisch in Form von Formulardaten eintragen kann. Diese Funktion wird im folgenden unter Hinweis auf Fig. 6 und Fig. 7 am Beispiel des Eintragens von Anmeldedaten in ein Bankportal beschrieben.

Der Ablauf beginnt gemäß Fig. 6 damit, dass der Benutzer in Schritt 50 das Sicherheitsmodul 14 mit dem Endgerät 10 verbindet und eine vom Sicherheitsmodul 14 bereitgestellte Auswahlseite aufruft. Letzteres kann beispielsweise geschehen, indem der Benutzer eine Adresse des Sicherheitsmoduls 14 in die Adresszeile des Browserfensters 16 eingibt. Das Benutzermodul 14 fordert daraufhin in Schritt 52 ein Kennwort (PIN) an. Sobald der Benutzer das Kennwort eingegeben hat (Schritt 54) und dieses vom Sicherheitsmodul 14 erfolgreich überprüft wurde (Schritt 56), sendet das Sicherheitsmodul 14 in Schritt 58 die Auswahlseite an den auf dem Endgerät 10 ausgeführten Browser.

Die vom Sicherheitsmodul 14 vorgegebene Auswahlseite präsentiert dem Benutzer diverse vom Sicherheitsmodul 14 unterstützte Angebote. In dem in Fig. 7 gezeigten Beispielablauf klickt der Benutzer in Schritt 60 auf einen Verweis, der einen Bezeichner eines Bankportals enthält - z.B. einen Verweis mit der URL 40. Der Browser sendet daraufhin die erste Anforderung 42, die vom Sicherheitsmodul 14 auf die bereits beschriebene Art in die zweite Anforderung 44 umgesetzt wird, um die zugehörige Bankportal-Seite aufzurufen (Schritt 62).

Die vom Server 12 erhaltene erste Antwort 46 stellt eine Startseite des Bankportals dar, in die geeignete Anmeldedaten - z.B. Kontonummer und PIN - einzutragen sind. Das Sicherheitsmodul 14 modifiziert zunächst die in der ersten Antwort 46 enthaltenen Verweise auf die bereits beschriebene Weise (Schritt 64). Ferner trägt das Sicherheitsmodul 14 in Schritt 66 Platzhalter in die Eingabefelder der Startseite ("Nutzermaske") ein. Die so geänderte Startseite wird in Schritt 68 als zweite Antwort 48 an das Endgerät 10 übertragen und dort im Browserfenster 16 angezeigt.

In Schritt 70 bestätigt der Benutzer die Startseite, indem er auf einen entsprechenden (modifizierten) Verweis klickt. Der Browser sendet daraufhin eine neue erste Anforderung 42 an das Sicherheitsmodul 14. Das Sicherheitsmodul 14 erzeugt daraus eine neue zweite Anforderung 44. Hierbei werden in Schritt 72 die Platzhalter in den Eingabefeldern durch die eigentlichen Anmeldedaten ersetzt. Das Sicherheitsmodul 14 ermittelt in Schritt 74 eine Zieladresse (Host- und Pfadangabe) und sendet in Schritt 76 die neue zweite Anforderung 44 an den Server 12.

In Schritt 78 empfängt das Sicherheitsmodul 14 dann eine Seite vom Server 12, die als neue erste Antwort 46 verarbeitet und als neue zweite Antwort 48 an das Endgerät 10 geleitet wird. Die Kommunikation kann auf die beschriebene Weise beliebig lange fortgesetzt werden.

In allen hier beschriebenen Ausgestaltungen kann das Sicherheitsmodul 14 als optionale Ergänzung eine Protokollierungsfunktion *(logging)* aufweisen. Hierbei zeichnet das Sicherheitsmodul 14 in der persistenten Protokolldatei 38 einen einstellbaren Satz von Parametern und Werten der durchgeführten Kommunikationsvorgänge auf. Dies können z.B. aufgerufene IP-Adressen, Zeitstempel, Anzahl der übermittelten Datenpakete, Sequenzenzähler und so weiter sein. Diese Parameter und Werte lassen sich mit wenig Aufwand ermitteln, weil der Protokollstapel 32 des Sicherheitsmoduls 14 die gesamte Kommunikation abwickelt und daher alle Parameter und Werte im Sicherheitsmodul 14 zur Verfügung stehen.

Die protokollierten Daten können von einer autorisierten Instanz, die sich durch einen Schlüssel oder ein Kennwort ausweist, aus dem Sicherheitsmodul 14 ausgelesen werden. Alternativ oder zusätzlich kann das Sicherheitsmodul 14 die Daten auch direkt an einen vorbestimmten Server senden.

Die gerade geschilderte Idee einer "protokollierenden Intemet-Chipkarte" wird nicht nur als Ergänzung der Funktionen des Sicherheitsmoduls 14 erachtet, sondern auch als eigenständige Erfindung, die von den Merkmalen eines wie ein Ursprungsserver angesprochenen Sicherheitsmoduls und einer Umsetzung von Anforderungen im Sicherheitsmodul unabhängig ist. Beispielsweise können Protokollierungen bei den folgenden Anwendungen unterstützt werden:
● VoIP- oder Multimedia-Content-Übertragung mit (S)RTP und/ oder SIP und/ oder MIKEY und/ oder DTLS,
● E-Mail-Übertragung mit (S)MIME,
● HTML-Übertragung mit HTTP(S), und
● RPC *(Remote Procedure Calls)* z.B. über SOAP und HTTP(S).

Mögliche Parameter und Werte, die protokolliert werden können, sind Parameter des unterlagerten TCP/IP- oder UDP/ IP-Protokolls, des Sicherheitsprotokolls wie SSL/TLS, IPSec, DTLS oder MIKEY, oder auch Parameter des Anwendungsprotokolls wie (S)RTP, (S)MIME, SOAP oder HTTP(S). Diese Parameter und Werte können aus den Protokoll-Headern der ausgetauschten Nachrichten extrahiert und in der Protokolldatei 38 gespeichert werden.

Eine im Sicherheitsmodul 14 durchgeführte und damit manipulationsgesicherte Protokollierung kann beispielsweise verwendet werden, um Verbindungsnachweise zu erbringen, z.B. einen Nachweis der Zustellung einer E-Mail oder einen Nachweis des Zugriffs auf eine bestimmte Ressource. Eine andere Anwendung ist die Entgeltberechnung *(billing)* aufgrund der protokollierten Informationen. Die Auswahl, welche der möglichen Parameter und Werte protokolliert werden sollen, und für welchen Zeitraum dies geschehen soll, wird je nach dem gewünschten Anwendungszweck getroffen.

Es versteht sich, dass die hier beschriebenen Ausführungsformen und Ausführungsvarianten lediglich als Beispiele zu sehen sind. Weitere Abwandlungen und Kombinationen der hier beschriebenen Merkmale sind für den Fachmann unmittelbar ersichtlich.

## Patentansprüche

1. Verfahren zum Zugriff auf eine Ressource (18), wobei das Verfahren durch ein als Chipkarte oder als Chipmodul oder als USB-Datenträger ausgebildetes tragbares Sicherheitsmodul (14) ausgeführt wird und das Verfahren beinhaltet:
- Empfangen einer ersten Anforderung (42) von einem mit dem Sicherheitsmodul (14) in einem privaten Netz befindlichen Endgerät (10), wobei die erste Anforderung (42) das Sicherheitsmodul (14) wie einen Ursprungsserver anspricht und einen der Ressource (18) zugeordneten Bezeichner *(ID₁)* enthält,
- Ermitteln zumindest einer Hostangabe (*URL_{1,HOST}*) und einer Pfadangabe *(URL_{1,PATH}, ID_{1,PATH})* der Ressource (18) in Abhängigkeit von dem in der ersten Anforderung (42) enthaltenen Bezeichner *(ID₁),*
- Senden einer zweiten Anforderung (44), die zumindest die ermittelte Pfadangabe *(URL_{1,PATH}, ID_{1,PATH})* enthält, über ein externes Computernetz (20) an einen durch die ermittelte Hostangabe (*URL_{1,HOST}*) bezeichneten Server (12),
- Empfangen einer ersten Antwort (46) von dem Server (12) in Reaktion auf die zweite Anforderung (44), wobei die erste Antwort (46) mindestens einen Verweis mit einer URL *(URL₁, URL₂)* enthält,
- Modifizieren der URL (*URL₁*, URL₂ in der ersten Antwort (46), um eine zweite Antwort (48) zu erhalten, wobei die modifizierte URL als Hostangabe eine Adresse *(HOST_{SM})* des Sicherheitsmoduls (14) aufweist, und
- Senden der zweiten Antwort (48) an das Endgerät (10).

2. Verfahren nach Anspruch 1, **dadurch gekennzeichnet, dass** das Sicherheitsmodul (14) zumindest die Hostangabe (*URL_{1,HOST}*) aus einer im Sicherheitsmodul (14) gespeicherten Umsetztabelle (36) ermittelt.

3. Verfahren nach Anspruch 2, **dadurch gekennzeichnet, dass** das Sicherheitsmodul (14) auch die Pfadangabe *(URL_{1,PATH})* aus der Umsetztabelle (36) ermittelt.

4. Verfahren nach Anspruch 2, **dadurch gekennzeichnet, dass** das Sicherheitsmodul (14) die Pfadangabe *(ID_{1,PATH})* unabhängig von der Umsetztabelle (36) aus dem Bezeichner *(ID₁)* ermittelt.

5. Verfahren nach Anspruch 4, **dadurch gekennzeichnet, dass** das Sicherheitsmodul (14) die Pfadangabe *(ID_{1,PATH})* als Teil des Bezeichners *(ID₁)* ermittelt.

6. Verfahren nach Anspruch 5, **dadurch gekennzeichnet, dass** in Abhängigkeit von zumindest einem Teil (URL₁, *URL₂, URL_{1,HOST})* der in der ersten Antwort (46) enthaltenen URL (*URL₁*, *URL₂)* ein Bezeichner *(ID₁, ID₂, ID_{1,HOST})* ermittelt wird, der zumindest einen Teil einer Pfadangabe der modifizierten URL bildet.

7. Verfahren nach Anspruch 6 in Verbindung mit einem der Ansprüche 2 bis 5, **dadurch gekennzeichnet, dass** der Bezeichner *(ID₁, ID₂, ID_{1,HOST})* aus der Umsetztabelle (36) ermittelt wird.

8. Verfahren nach Anspruch 7, **dadurch gekennzeichnet, dass** ein Eintrag der Umsetztabelle (36) ermittelt wird, der die in der ersten Antwort (46) enthaltene URL *(URL₁, URL₂)* und den Bezeichner *(ID₁, ID₂)* aufweist, und dass die Pfadangabe der modifizierten URL durch den Bezeichner *(ID₁, ID₂)* gebildet wird.

9. Verfahren nach Anspruch 7, **dadurch gekennzeichnet, dass** ein Eintrag der Umsetztabelle (36) ermittelt wird, der eine Hostangabe *(URL_{1,HOST})* der in der ersten Antwort (46) enthaltenen URL *(URL₁)* und den Bezeichner in Form eines Hostbezeichners *(ID_{1,HOST})* aufweist, und dass die Pfadangabe der modifizierten URL durch den Hostbezeichner *(ID_{1,HOST})* und eine Pfadangabe *(URL_{1,PATH})* der in der ersten Antwort (46) enthaltenen URL *(URL₁)* gebildet wird.

10. Verfahren nach einem der Ansprüche 7 bis 9, **dadurch gekennzeichnet, dass** die Umsetztabelle (36) dynamisch mit neu bestimmten Bezeichnern *(ID₂, ID_{2,HOST})* erweitert wird.

11. Verfahren nach einem der Ansprüche 1 und 6 bis 10, **dadurch gekennzeichnet, dass** die erste Antwort (46) mindestens einen Verweis mit einer URL *(URL₂)* enthält, der beim Bilden der zweiten Antwort (48) unverändert in die zweite Antwort (48) aufgenommen oder durch einen Verweis mit einer vorbestimmten URL ersetzt oder gelöscht oder durch einen Sicherheitshinweis ersetzt wird.

12. Verfahren nach einem der Ansprüche 1 bis 11, **dadurch gekennzeichnet, dass** das Sicherheitsmodul (14) ferner eine Funktion zum automatischen Eintragen von Formulardaten und/ oder eine Protokollierungsfunktion aufweist.

13. Tragbares Sicherheitsmodul (14) mit einem Prozessor (22) und mindestens einem Speicher (24), **dadurch gekennzeichnet, dass** das Sicherheitsmodul (14) dazu eingerichtet ist, ein Verfahren nach einem der Ansprüche 1 bis 12 auszuführen.

14. Computerprogrammprodukt, das Programmbefehle für einen Prozessor (22) eines Sicherheitsmoduls (14) aufweist, wobei die Programmbefehle den Prozessor (22) des Sicherheitsmoduls (14) dazu veranlassen, ein Verfahren nach einem der Ansprüche 1 bis 12 auszuführen.

## Claims

1. A method for accessing a resource (18), wherein the method is executed by a portable security module (14) configured as a chip card or as a chip module or as a USB data carrier, and the method comprises:
- receiving a first request (42) from a terminal (10) located in a private network with the security module (14), wherein the first request (42) addresses the security module (14) like an origin server and contains an identifier *(ID₁)* associated with the resource (18),
- determining at least one host specification *(URL_{1,HOST})* and one path specification *(URL₁,_{PATH}, ID_{1,PATH})* of the resource (18) in dependence on the identifier *(ID₁)* contained in the first request (42),
- sending a second request (44) containing at least the determined path specification *(URL_{1,PATH}, ID_{1,PATH})* via an external computer network (20) to a server (12) identified by the determined host specification *(URL_{1,HOST}),*
- receiving a first response (46) from the server (12) in answer to the second request (44), wherein the first response (46) contains at least one reference with a URL *(URL₁, URL₂),*
- modifying the URL *(URL₁, URL₂)* in the first response (46) to obtain a second response (48), wherein the modified URL has as host specification an address *(HOST_{SM})* of the security module (14), and
- sending the second response (48) to the terminal (10).

2. The method according to claim 1, **characterized in that** the security module (14) determines at least the host specification *(URL_{1,HOST})* on the basis of a conversion table (36) stored in the security module (14).

3. The method according to claim 2, **characterized in that** the security module (14) determines also the path specification *(URL_{1,PATH})* from the conversion table (36).

4. The method according to claim 2, **characterized in that** the security module (14) determines the path specification *(ID_{1,PATH})* independently of the conversion table (36) on the basis of the identifier *(ID₁).*

5. The method according to claim 4, **characterized in that** the security module (14) determines the path specification *(ID_{1,PATH})* as part of the identifier *(ID₁).*

6. The method according to claim 5, **characterized in that** in dependence on at least a portion *(URL₁, URL₂, URL_{1,HOST})* of the URL *(URL₁, URL₂)* contained in the first response (46), an identifier *(ID₁, ID₂, ID_{1,HOST})* is determined, which forms at least one part of a path specification of the modified URL.

7. The method according to claim 6 in connection with any of the claims 2 to 5, **characterized in that** the identifier *(ID₁, ID₂, ID_{1,HOST})* is determined from the conversion table (36).

8. The method according to claim 7, **characterized in that** an entry of the conversion table (36) is determined, said entry having the URL *(URL₁, URL₂)* contained in the first response (46) and the identifier *(ID₁, ID₂),* and that the path specification of the modified URL is formed by the identifier *(ID₁, ID₂).*

9. The method according to claim 7, **characterized in that** an entry of the conversion table (36) is determined, said entry having a host specification *(URL_{1,HOST})* of the URL *(URL₁)* contained in the first response (46) and the identifier in the form of a host identifier *(ID_{1,HOST}),* and that the path specification of the modified URL is formed by the host identifier *(ID_{1,HOST})* and a path specification *(URL_{1,PATH})* of the URL *(URL₁)* contained in the first response (46).

10. The method according to any of the claims 7 to 9, **characterized in that** the conversion table (36) is dynamically extended with newly determined identifiers *(ID₁, ID_{2,HOST}).*

11. The method according to any of the claims 1 and 6 to 10, **characterized in that** the first response (46) contains at least one reference with a URL *(URL₂),* which, upon forming the second response (48), is included in the second response (48) without any changes or replaced by a reference with a predetermined URL or erased or replaced by a security notice.

12. The method according to any of the claims 1 to 11, **characterized in that** the security module (14) further has a function for automatically entering form data and/ or a logging function.

13. A portable security module (14) with a processor (22) and at least one memory (24), **characterized in that** the security module (14) is adapted to execute a method according to any of the claims 1 to 12.

14. A computer program product having program commands for a processor (22) of a security module (14), wherein the program commands cause the processor (22) of the security module (14) to execute a method according to any of the claims 1 to 12.

## Revendications

1. Procédé d'accès à une ressource (18), le procédé étant exécuté par un module de sécurité (14) portable réalisé sous forme de carte à puce ou de module puce ou de support de données USB et le procédé comportant :
- réception d'une première demande (42) d'un terminal (10) se trouvant avec le module de sécurité (14) dans un réseau privé, la première demande (42) accostant le module de sécurité (14) comme un serveur d'origine et contenant un identificateur *(ID₁)* affecté à la ressource (18),
- détermination d'au moins une indication d'hôte *(URL_{1,HOST})* et d'une indication de chemin *(URL_{1,PATH}, ID_{1,PATH})* de la ressource (18) en fonction de l'identificateur *(ID₁)* contenu dans la première demande (42),
- envoi d'une seconde demande (44) qui contient au moins l'indication de chemin *(URL_{1,PATH}, ID_{1,PATH})* déterminée, par l'intermédiaire d'un réseau informatique (20) externe à un serveur (12) identifié par l'indication d'hôte *(URL_{1,HOST})* déterminée,
- réception d'une première réponse (46) du serveur (12) en réaction à la seconde demande (44), la première réponse (46) contenant au moins un renvoi avec un URL *(URL_{1,} URL₂),*
- modification de l'URL *(URL₁, URL₂)* dans la première réponse (46) afin d'obtenir une seconde réponse (48), l'URL modifié présentant comme indication d'hôte une adresse *(HOST_{SM})* du module de sécurité (14), et
- envoi de la seconde réponse (48) au terminal (10).

2. Procédé selon la revendication 1, **caractérisé en ce que** le module de sécurité (14) détermine au moins l'indication d'hôte *(URL_{1,HOST})* à partir d'une table de conversion (36) mémorisée dans le module de sécurité (14).

3. Procédé selon la revendication 2, **caractérisé en ce que** le module de sécurité (14) détermine aussi l'indication de chemin *(URL_{1,PATH})* à partir de la table de conversion (36).

4. Procédé selon la revendication 2, **caractérisé en ce que** le module de sécurité (14) détermine l'indication de chemin *(URL₁,_{PATH})* indépendamment de la table de conversion (36) à partir de l'identificateur *(ID₁).*

5. Procédé selon la revendication 4, **caractérisé en ce que** le module de sécurité (14) détermine l'indication de chemin *(URL_{1,PATH})* en tant que partie de l'identificateur *(ID₁).*

6. Procédé selon la revendication 5, **caractérisé en ce que**, en fonction d'au moins une partie *(URL_{1,} URL_{2,} URL_{1, HOST})* de l'URL *(URL_{1,} URL₂)* contenu dans la première réponse (46), un identificateur *(ID₁, ID₂, ID_{1,HOST})* est déterminé, qui constitue au moins une partie d'une indication de chemin de l'URL modifié.

7. Procédé selon la revendication 6 en relation avec une des revendications de 2 à 5, **caractérisé en ce que** l'identificateur *(ID_{1,} ID_{2,} ID_{1,HOST})* est déterminé à partir de la table de conversion (36).

8. Procédé selon la revendication 7, **caractérisé en ce qu'**une entrée de la table de conversion (36) est déterminée, qui présente l'URL *(URL_{1,} URL₂)* contenu dans la première réponse (46) et l'identificateur *(ID_{1,} ID₂),* et **en ce que** l'indication de chemin de l'URL modifié est constituée par l'identificateur *(ID_{1,} ID₂).*

9. Procédé selon la revendication 7, **caractérisé en ce qu'**une entrée de la table de conversion (36) est déterminée, qui présente une indication d'hôte *(URL_{1,HOST})* de l'URL *(URL₁)* contenu dans la première réponse (46) et l'identificateur sous forme d'un identificateur d'hôte *(ID_{1,HOST}),* et **en ce que** l'indication de chemin de l'URL modifié est constituée par l'identificateur d'hôte *(ID_{1,HOST})* et une indication de chemin *(URL_{1,PATH})* de l'URL *(URL₁)* contenu dans la première réponse (46).

10. Procédé selon une des revendications de 7 à 9, **caractérisé en ce que** la table de conversion (36) est dynamiquement élargie avec des identificateurs *(ID₁, ID2,_{HOST})* à nouveau définis.

11. Procédé selon une des revendications de 1 et 6 à 10, **caractérisé en ce que** la première réponse (46) contient au moins un renvoi avec un URL *(URL₂)* qui, lors de la constitution de la deuxième réponse (48), est recueilli dans la deuxième réponse (48) de manière inchangée ou est remplacé par un renvoi avec un URL prédéfini ou effacé ou remplacé par une mention de sécurité.

12. Procédé selon une des revendications de 1 à 11, **caractérisé en ce que** le module de sécurité (14) présente en outre une fonction d'entrée automatique de données de formulaire et/ou une fonction d'établissement de protocole.

13. Module de sécurité (14) portable comportant un processeur (22) et au moins une mémoire (24), **caractérisé en ce que** le module de sécurité (14) est configuré pour exécuter un procédé selon une des revendications de 1 à 12.

14. Produit de programme d'ordinateur qui présente des ordres de programme pour un processeur (22) d'un module de sécurité (14), les ordres de programme entraînant le processeur (22) du module de sécurité (14) à exécuter un procédé selon une des revendications de 1 à 12.
